Europäisches Patentamt

European Patent Office

Office européen des brevets

(11) Veröffentlichungsnummer: **0 103 109**

**B1**

(12) **EUROPÄISCHE PATENTSCHRIFT**

(45) Veröffentlichungstag der Patentschrift:
23.11.88

(21) Anmeldenummer: **83107036.2**

(22) Anmeldetag: **18.07.83**

(51) Int. Cl.⁴: **G 01 N 33/48**, G 01 N 27/38,
**C 12 M 1/40**

(54) Verfahren zur Bestimmung der Zuckerkonzentration.

(30) Priorität: **30.07.82 DE 3228551**

(43) Veröffentlichungstag der Anmeldung:
**21.03.84 Patentblatt 84/12**

(45) Bekanntmachung des Hinweises auf die Patenterteilung:
**23.11.88 Patentblatt 88/47**

(84) Benannte Vertragsstaaten:
**AT DE FR GB IT NL SE**

(56) Entgegenhaltungen:
**EP-A-0 071 152**
**DE-A-2 817 363**
**FR-A-2 406 825**
**GB-A-1 531 761**
**US-A-4 317 705**

**MEDICAL PROGRESS THROUGH TECHNOLOGY,
Band 6, Nr. 4, 1979 J.J. LEWANDOWSKI et al.
"Electrochemical determination of glucose
concentration in saline solutions", Seiten 163-168**
**BIOMED.TECHNIK, Band 22, 1977 U. GEBHARDT et
al. "Entwicklung eines inplantierbaren
elektrokatalytischen Glucosesensors", Seiten 399,
400**
**ANALYTICAL CHEMISTRY, vol. 50, no. 7, June 1978
D.A. GOUGH et al. "Effect of coreactants on
electrochemical glucose oxidation", Seiten 941-944**

(73) Patentinhaber: **Siemens Aktiengesellschaft Berlin
und München, Wittelsbacherplatz 2, D-8000
München 2 (DE)**

(72) Erfinder: **Richter, Gerhard, Dr., An der Lauseiche
30, D-8520 Erlangen (DE)**
Erfinder: **Luft, Günter, Lindenstrasse 4, D-8560 Lauf
(DE)**
Erfinder: **Gebhardt, Ulrich, Zedernstrasse 18,
D-8521 Langensendelbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Konzentrationsbestimmung von Zucker in Gegenwart störender Fremdsubstanzen insbesondere zur Bestimmung von Glucose in einer Körperflüssigkeit, mittels eines eine Meßelektrode mit vorgelagerter Membran aufweisenden elektrokatalytischen Zuckersensors, wobei die Meßelektrode auf ein Reaktivierungspotential und auf ein Meßpotential potentiostatiert und der während der Meßperiode fließende Strom - mit einer zeitlichen Verzögerung in bezug auf den Beginn der Meßperiode - als Meßsignal ausgewertet wird.

Die Bestimmung der Zuckerkonzentration in einer Körperflüssigkeit, insbesondere dem Blut eines Patienten, ist beispielsweise bei Diabetikern von Bedeutung. Für einen Diabetespatienten, dessen natürliche Glucosekonzentrationsregelung gestört ist, ist es nämlich wichtig, daß der normale Blutglucosespiegel über den Tag hinweg künstlich möglichst konstant gehalten wird. Der Blutglucosespiegel kann durch Diät, Insulininjektionen und durch eine Bewegungstherapie beeinflußt werden. Wesentlich ist dabei, daß eine Über- oder Unterkompensation des Zuckergehaltes im Blut vermieden wird. Für den Patienten selbst ist es wichtig, den jeweiligen Blutzuckergehalt zu kennen, um gegebenenfalls geeignete Maßnahmen zur Regelung ergreifen zu können.

Es ist auch bereits in Erwägung gezogen worden, die Glucosekonzentration automatisch durch eine sogenannte künstliche Betazelle zu regulieren, indem die Insulinzufuhr zum Blut durch einen Glucosesensor gesteuert wird und wobei immer dann, wenn ein Glucosesollwert überschritten wird, Insulin - gegebenenfalls proportional zur Abweichung vom Sollwert - dem Blut zugeführt wird.

Bislang erfolgt die Glucosebestimmung im Blut im allgemeinen extern im klinischen vor auf photometrischem Wege. Es sind aber auch elektrochemische Sensoren bekannt, die eine direkte Bestimmung der Glucose in der Körperflüssigkeit ermöglichen. Bei den sogenannten Enzymsensoren wird die Glucose mit Hilfe von Glucoseoxidase zu Gluconsäure oxidiert, wobei Sauerstoff verbraucht und Wasserstoffperoxid gebildet wird. Der Sauerstoffverbrauch bzw. die Wasserstoffperoxidbildung läßt sich dabei elektrochemisch messen und damit wird ein Signal erhalten, das mit der Glucosekonzentration in Zusammenhang steht. Da Enzymsensoren selektiv arbeiten und nicht auf Fremdsubstanzen ansprechen, ist damit zwar eine reproduzierbare Glucosebestimmung möglich, derartige Sensoren eignen sich jedoch nicht für eine Langzeitimplantation, weil die Enzyme, wie alle anderen Proteine, unter physiologischen Bedingungen im Laufe der Zeit zerfallen, d. h. sie sind unter Körperbedingungen nicht langzeitstabil.

Aus der DE-PS-2 200 119 ist ein elektrokatalytischer Glucosesensor bekannt. Dieser Sensor ist aber, wenn er mit Potentialkontrolle betrieben wird, ebenfalls nicht langzeitstabil; bei einem stromkontrollierten Betrieb andererseits läßt die Empfindlichkeit zu wünschen übrig.

Mit elektrokatalytischen Glucosesensoren sind bislang zwar zeitweise Messungen möglich, insbesondere Relativmessungen (vgl. dazu: "Trans. Amer. Soc. Artif. Int. Organs", Vol. XIX, 1973, Seiten 352 bis 360), es treten aber stets noch Störungen des Meßsignals durch Coreaktanten auf. Verunreinigungen und Begleitsubstanzen können dabei nämlich entweder an der Meßelektrode oxidiert werden und damit das Meßsignal verfälschen oder die Aktivität der Meßelektrode durch Blockierung einschränken. Bei implantierbaren Sensoren haben sich darüber hinaus Bestandteile der Körperflüssigkeit, insbesondere Harnstoff und Aminosäuren, als störend erwiesen, da sie eine reproduzierbare Langzeitmessung vereiteln.

Dies gilt im wesentlichen auch für einen implantierbaren elektrokatalytischen Glucosesensor, der in der Zeitschrift "Biomed. Technik", 22 (1977), Ergänzungsband, Seiten 399 und 400, beschrieben ist. Dieser Sensor, der eine Meß-, eine Gegen- und eine Bezugselektrode aufweist, wird nach dem sogenannten Spannungssprungverfahren betrieben, d. h. der Meßelektrode wird abwechselnd ein Meßpotential und ein - im Vergleich dazu positiveres - Reaktivierungspotential aufgeprägt. Während der Meßperiode wird der Strom integriert und dieses Integral stellt am Ende der Meßperiode das Meßsignal dar.

Eine empfindliche und zuverlässige Glucosebestimmung, auch in Körperflüssigkeiten, erlaubt an sich das aus der DE-OS-2 817 363 bekannte Verfahren, bei dem die Auswertung des Stromes mit einer zeitlichen Verzögerung in bezug auf den Beginn der Meßperiode vorgenommen wird und bei dem durch eine Membran, die der Meßelektrode des elektrokatalytischen Zuckersensors vorgelagert ist, die Nachlieferung der störenden Fremdsubstanzen zur Meßelektrode so gehemmt wird, daß sich in der Reaktivierungsphase - bei der Oxidation der Fremdsubstanzen - ein Diffusionsgrenzstrom einstellt. Eine zuverlässige Bestimmung der Glucosekonzentration über längere Zeiträume hinweg erweist sich bei diesem Verfahren aber dann als schwierig, wenn in der Körperflüssigkeit wechselnde Harnstoffkonzentrationen vorliegen. Dann kann nämlich das Clucosemeßsignal relativ stark beeinflußt werden, so daß bei der Glucosebestimmung merkliche Fehler auftreten. Bei einer kontinuierlichen Blutzuckerbestimmung muß aber stets mit wechselnden Harnstoffkonzentrationen gerechnet werden.

Aus "Med. Progr. Technol.", 6 (1979), Seiten 163 bis 168, ist ein Verfahren zur elektrochemischen Bestimmung der Glucosekonzentration in physiologischen Lösungen bekannt, bei welchem dem Meßpotential, das bei 0,55 V liegt (bezogen auf eine gesättigte Kalomelelektrode), zwei Regenerierungspotential vorgelagert sind, von denen das eine bei +1 V und das andere bei -1 V liegt. Die Meßelektrode, die aus auf einem Platindraht aufgebrachten, durch Polyvinylchlorid gebundenem Platinpulver besteht, wird dabei vor der Messung zuerst beim negativen und dann beim positiven Potential regeneriert, d. h. das dem Meßpotential unmittelbar vorausgehende Potential ist positiver als dieses, während das erste Potential negativer ist als das Meßpotential. Bei diesem Verfahren wird aber lediglich Glucose bestimmt; die Störung der Messungen durch die zahlreichen anderen körpereigenen Stoffe wird dagegen nicht berücksichtigt. Beim bekannten Verfahren liegt außerdem das erste der beiden Regenerierungspotentiale bei einem sehr negativen Wert, nämlich bei -340 mV/H$_{2rev}$, d. h. in einem Bereich, wo bereits eine Wasserstoffentwicklung erfolgt. Dies ist aber sehr ungünstig. Andererseits liegt das Meßpotential mit +1210 mV/H$_{2rev}$ sehr hoch, wodurch die Selektivität beeinträchtigt wird. Darüber hinaus tritt bei diesem Verfahren im interessierenden Meßbereich, d. h. im normalen physiologischen Bereich, nämlich zwischen 80 und 100 mg %, ein Meßfehler von ca. 50 % auf, der in der Praxis nicht tolerierbar ist.

Aus der GB-PS-1 531 761 ist ein elektrochemischer Detektor bzw. ein Verfahren zum Nachweis einer oder mehrerer elektroaktiver Spezies bekannt, wobei einer Sensorelektrode eine sich periodisch ändernde Spannung in der Weise aufgeprägt wird, daß ein erster Teil der Spannung als ein Meßpotential fungiert und ein zweiter Teil als ein Reinigungspotential. Bei der der Sensorelektrode aufgeprägten Spannung kann es sich um eine Rechteckspannung handeln, z. B. um eine Spannung mit einer positiven und einer negativen Polarität. Wenn die elektroaktive Spezies elektrooxidierbar ist, dann ist das Meßpotential positiv und das Reinigungspotential negativ oder zumindest weniger positiv als das Meßpotential. Bei elektroreduzierbaren Spezies kehren sich die Verhältnisse um. Der bekannte elektrochemische Detektor findet bei der Hochdruck-Flüssigkeitschromatographie Anwendung, wobei einzelne Substanzen nacheinander reproduzierbar erfaßt werden sollen.

Aufgabe der Erfindung ist es, ein Verfahren zur Konzentrationsbestimmung von Zucker der eingangs genannten Art, bei dem einer Meßelektrode ein Reaktivierungs- und ein Meßpotential aufgeprägt wird, in der Weise auszugestalten, daß auch bei wechselnden Harnstoffkonzentrationen eine empfindliche und über lange Zeit zuverlässige Zuckerbestimmung gewährleistet ist.

Dies wird erfindungsgemäß dadurch erreicht, daß der Meßelektrode nach dem Reaktivierungspotential und vor dem Meßpotential kurzzeitig ein drittes Potential, ein sogenanntes Reduktionspotential, aufgeprägt wird, das negativer ist als das Meßpotential.

Das dritte Potential, d. h. das Reduktionspotential, ist also negativer als das Meßpotential. Da andererseits das Meßpotential selbst negativer ist als das Reaktivierungspotential, liegt das Meßpotential somit zwischen dem Reduktions- und dem Reaktivierungspotential. Diesen beiden Potentialstufen kommt beim erfindungsgemäßen Verfahren folgende Bedeutung zu.

Da die die Glucose begleitenden störenden Fremdsubstanzen im allgemeinen schwerer oxidierbar sind als Glucose, sollte die Glucosebestimmung prinzipiell unter milden Oxidationsbedingungen möglich sein. In der Praxis ist dies aber nicht der Fall, da durch andere, festhaftende Begleitsubstanzen eine Blockierung der Elektroden- bzw. Katalysatoroberfläche erfolgt. Die Beseitigung dieser Blockierung gelingt aber, wenn die Meßelektrode - bei einem stark anodischen Potential - oxidiert wird, und wenn gleichzeitig eine dichte Membran vor der Elektrode die Nachlieferung der blockierend wirkenden Substanzen bremst. Dies gilt vor allem für eine Blockierung durch Aminosäuren.

Wegen der im Vergleich zu Glucose relativ kleinen Molekülgröße des Harnstoffes und der in etwa gleichen Konzentrationsverhältnisse im Blut diffundiert - neben Glucose - aber auch Harnstoff durch die der Meßelektrode vorgelagerte Membran. Dieser Harnstoff hemmt nun vermutlich die Reduktion der beim Reaktivierungspotential auf der Elektrodenoberfläche gebildeten Oxiddeckschicht, beispielsweise einer Platinelektrode, und verzögert dadurch die beim Meßpotential erfolgende Glucoseoxidation. Beim erfindungsgemäßen Verfahren wird nun ein verbessertes Glucosesignal beim Meßpotential dadurch erhalten, daß die Elektrode vor der eigentlichen Messung kurzzeitig auf ein - im Vergleich zum Meßpotential - negatives Potential gebracht wird. Dabei wird nämlich die Hemmung der Reduktion der (Platin-)Oxiddeckschicht durch Harnstoff aufgehoben bzw. die Reduktion der Oxide beschleunigt. Hierdurch ergibt sich wiederum - beim eigentlichen Meßpotential - eine bessere Empfindlichkeit bei der Glucosebestimmung.

Die Dauer des der Meßelektrode aufgeprägten Reduktionspotentials beträgt vorzugsweise 1 bis 10 s. Die Reaktivierung und die Messung erfolgen im allgemeinen in einem längeren Zeitraum. So kann das Reaktivierungspotential beispielsweise für 50 s an der Meßelektrode anliegen und das Meßpotential für 40 s. Für die Messung ist beispielsweise aber bereits auch ein Zeitraum von 20 s ausreichend.

Für die drei verschiedenen Potentialstufen gilt beim erfindungsgemäßen Verfahren vorteilhaft folgendes:

Das Reaktivierungspotential ist größer als 800 mv und liegt vorzugsweise zwischen 1200 und 1600 mv;

das Meßpotential liegt zwischen 200 und 800 mv und beträgt vorzugsweise etwa 400 mV;

das Reduktionspotential ist kleiner als 200 mV und beträgt vorzugsweise etwa 100 mV.

Die Potentialwerte sind dabei jeweils bezogen auf das Potential der reversiblen Wasserstoffelektrode im gleichen Elektrolyten.

Die Einstellung des Reduktionspotentials erfolgt beim erfindungsgemäßen Verfahren vorzugsweise derart, daß der Meßelektrode das Reaktivierungspotential, das Reduktionspotential und das Meßpotential nacheinander potentiostatisch aufgeprägt werden. Die Einstellung des Reduktionspotentials kann aber auch auf andere Weise erfolgen:

1. Nach der Reaktivierung wird auf das gewünschte negative Potential potentiostatiert; das Reduktionspotential kann dabei bis zu 0,4 V negativer sein als das Meßpotential. Das negative Potential kann auch potentiodynamisch angesteuert werden, insbesondere mit einem dreieckförmigen Verlauf, und in derselben Weise kann nachfolgend zum Meßpotential übergegangen werden.

2. Im Anschluß an die Reaktivierungsphase läßt man einen kathodischen Strom gesteuert so fließen, daß dabei eine vorgegebene Ladung umgesetzt wird, die gerade ausreicht, um das Reduktionspotential zu erreichen. Dabei wird die Doppelschichtkapazität umgeladen und die Reduktion der (Platin-)Oxide und von adsorbierten Reaktionsprodukten läuft beschleunigt ab.

3. Wird der ohmsche Spannungsabfall zwischen der Meßelektrode und der Bezugselektrode kompensiert, was mittels eines Potentiostaten erfolgen kann, so kann durch eine gewisse Überkompensation das angestrebte Ziel ebenfalls erreicht werden. Beim Umschalten vom Reaktivierungspotential auf das Meßpotential erfolgt dann nämlich ein Überschwingen, wodurch vorübergehend ein Potential eingestellt wird, das negativer ist als das Meßpotential, d. h. das Reduktionspotential. In der Praxis wird dazu im Meßkreis zwischen Meßelektrode und Potentiostat durch Einschalten eines kleinen ohmschen Widerstandes ein Spannungsabfall erzeugt, der durch negative Verstärkung mit einem Verstärkungsfaktor ≥ 1 dem Spannungsabfall angeglichen wird, der am Widerstand zwischen Meß- und Bezugselektrode entsteht. Diese Spannung wird zur Sollspannung am Eingang des Potentiostaten addiert. Ein Überschwingen erfolgt dabei dann, wenn die Verstärkung ein wenig größer gewählt wird als an sich erforderlich ist.

Ziel der genannten Maßnahmen ist also eine schnelle Reduktion der Oxidschicht auf der Meßelektrode, damit diese Elektrode für die Dauer des Meßpotentials eine optimale Aktivität besitzt. Eine Steigerung der Aktivität der Elektrode selbst über ein bestimmtes Maß hinaus ist nicht sinnvoll, weil eine höhere Aktivität eine größere Dicke der Aktivschicht bewirkt und damit eine Zeitverzögerung mit sich bringt und darüber hinaus in den Energieverbrauch des Systems stark eingeht. Eine Erhöhung des Elektrodenpotentials ist auch nicht beliebig möglich, weil oberhalb eines bestimmten Potentials die Sauerstoffentwicklung beginnt und der verwendete Zuckersensor unbrauchbar wird, sobald sich Gas zwischen der Elektrode und der Membran ansammelt. Beim erfindungsgemäßen Verfahren wird deshalb die Reaktivierung, wie bereits erwähnt, vorteilhaft bei einem Potential $\varphi_1 > 800$ mV vorgenommen; vorzugsweise liegt das Reaktivierungspotential zwischen 1200 und 1600 mV. Der zulässige Wert hängt auch von der Dauer der Reaktivierung ab. So findet innerhalb eines Zeitraumes von ca 25 s auch bei 1600 mV noch keine Gasentwicklung statt.

Ein elektrokatalytischer Zuckersensor zur Durchführung des erfindungsgemäßen Verfahrens weist eine Meß-, eine Gegen- und eine Bezugselektrode auf, wobei vor der aktiven Fläche der Meßelektrode eine hydrophile Membran angeordnet ist. Das Potential der Meßelektrode wird beispielsweise durch einen Potentiostaten - mit Hilfe eines Zeitprogrammgebers - so gesteuert, daß abwechselnd die drei vorgegebenen Sollpotentiale eingestellt werden. Der dabei beim Meßpotential fließende Strom wird ausgewertet, vorzugsweise mittels eines Integrators.

Durchlässigkeit und Dicke der der Meßelektrode vorgelagerten Membran sind nicht beliebig wählbar, sie richten sich vielmehr nach der gewünschten Diffusionsbegrenzung des Meßsignals und nach der gewünschten Meßdauer. Die Zeitkonstante des Zuckersensors ist nämlich von diesen Größen abhängig: Sie ist bestimmt durch

$\tau = 0,167 \, d^2/D$;

dabei ist d die Dicke der Membran und D der Diffusionskoeffizient. Um die Diffusionsbegrenzung sicherzustellen, wird ein möglichst kleiner Diffusionskoeffizient angestrebt, nämlich ein Diffusionskoeffizient

$D < 10^{-8} \, cm^2 \cdot s^{-1}$,

wobei die Begrenzung nach unten durch die technischen Gegebenheiten zur Strommessung vorgezeichnet ist. Um gleichzeitig die erforderliche Zeitkonstante zu gewährleisten, sie sollte kleiner als 10 min sein, weist die Membran vorzugsweise eine Dicke $d < 50 \, \mu m$ auf.

Zur Herstellung von Membranen mit einer derart geringen Durchlässigkeit, wie sie vorstehend aufgezeigt wurde, kann vorteilhaft von relativ hydrophobe Folien bildenden Kunststoffen, wie Polyäthylen, Polytetrafluoräthylen und Siliconkautschuk, ausgegangen werden, die durch geeignete Maßnahmen, insbesondere Strahlengrafting mit Acrylsäure, Methacrylsäure, Chlorsulfonsäure oder Benzylamin, d. h. durch strahlenchemische Pfropfpolymerisation, hydrophiliert worden sind.

Es kann beispielsweise aber auch eine Membran aus sulfoniertem Polysulfon verwendet werden.

Anhand von Ausführungsbeispielen soll die Erfindung noch näher erläutert werden.

**Beispiel 1**

Eine platinierte Platinelektrode mit einer aktiven Fläche von 0,03 cm$^2$ wird nach folgendem Potentialprogramm polarisiert:

| | |
|---|---|
| Reaktivierungspotential | $\varphi_1 = 1500$ mV/H$_{2rev}$ (Dauer: 50 s); |
| Reduktionspotential | $\varphi_2 = 100$ mV/H$_{2rev}$ (Dauer: 10 s); |
| Meßpotential | $\varphi_3 = 400$ mV/H$_{2rev}$ (Dauer: 40 s). |

Die Integration des Stromes beim Meßpotential $\varphi_3$ erfolgt im Bereich von 20 bis 40 s. Als Bezugselektrode dient eine Silber/Silberchlorid-Elektrode, die Gegenelektrode besteht aus platiniertem Platin. Vor der Meßelektrode, d. h. zwischen Meß- und Gegenelektrode, ist eine 20 µm dicke Polysulfonmembran angeordnet. Die Platinierung der Elektrode erfolgt aus einer 2,5 %-igen Lösung von Hexachloroplatinsäure bei einer Stromdichte von 30 mA · cm$^{-2}$ für die Dauer von 5 min. Bei den Untersuchungen wird als Elektrolyt eine Art Tyrode-Lösung verwendet, die aus 125 mmol Natriumchlorid, 2,68 mmol Kaliumchlorid, 1,8 mmol Calciumchlorid, 1,05 mmol Magnesiumchlorid, 0,417 mmol Natriumdihydrogenphosphat und 12 mmol Natriumhydrogencarbonat in 1 l Wasser besteht. Um den Sauerstoffpartialdruck und den pH-Wert der Lösung während der Versuche konstant zu halten, wird mit einer Mischung aus 95 % Luft und 5 % Kohlendioxid gespült.

Zu Versuchsbeginn werden dem Elektrolyten 0,01 % Harnstoff zugesetzt. Verfolgt man nun den Verlauf des Meßsignals in Abhängigkeit von der Zahl der Meßperioden bei Änderung der Glucose- bzw. Harnstoffkonzentration, so ergibt sich folgendes. Wird die Glucosekonzentration von anfänglich 0,05 % schrittweise auf 0,3 % erhöht, so folgt das Meßsignal entsprechend, d. h. die umgesetzte Ladung steigt proportional zur Glucosekonzentration. Wird dann beim höchsten Meßwert, d. h. bei 0,3 % Glucose, die Harnstoffkonzentration auf 0,038 % erhöht, so erfolgt keine Änderuug des Meßsignals. Wird anschließend die Glucosekonzentration stufenweise auf 0,05 % verringert und dann die Harnstoffkonzentration auf den minimalen Wert, d. h. 0,01 %, zurückgenommen, so ergibt sich kaum eine Abweichung.

**Beispiel 2** (Vergleichsversuch)

Einer platinierten Platinelektrode (aktive Fläche: 0,03 cm$^2$) als Meßelektrode wird ein Potentialverlauf mit nur zwei Potentialsprüngen aufgeprägt:

| | |
|---|---|
| Reaktivierungspotential | $\varphi_1 = 1600$ mV/H$_{2rev}$ (Dauer: 25 s); |
| Meßpotential | $\varphi_3 = 400$ mV/H$_{2rev}$ (Dauer: 25 s). |

Die Integration des Stromes beim Meßpotential $\varphi_3$ erfolgt im Zeitraum von 20 bis 25 s.

Zwar ergibt sich auch hier bei einer Änderung der Glucosekonzentration ein Meßsignal, bei einer Zugabe von 0,016 % Harnstoff (Glucosekonzentration: 0,2 %) erfolgt aber eine starke Verringerung des Meßsignals; eine weitere Verringerung erfolgt, wenn die Harnstoffkonzentration auf 0,038 % erhöht wird. Wird nun die Glucosekonzentration von 0,2 % auf 0,1 % verringert, so erfolgt nur noch eine geringe Änderung des Meßsignals, und ebenso bei einer (erneuten) Erhöhung der (Glucosekonzentration von 0,1 % auf 0,2 %. Die Elektrode wird also durch den Harnstoff blockiert. Das Meßsignal steigt erst dann wieder an, wenn die Harnstoffkonzentration verringert wird.

**Beispiel 3**

Eine wie in Beispiel 1 platinierte Platinelektrode mit einer aktiven Fläche von 0,125 cm$^2$ wird nach folgendem Potentialprogramm polarisiert:

| | |
|---|---|
| Reaktivierungspotential | $\varphi_1 = 1500$ mV/H$_{2rev}$ (Dauer: 50 s); |
| Reduktionspotential | $\varphi = 100$ mV/H$_{2rev}$ (Dauer: 10 s); |
| Meßpotential | $\varphi_3 = 400$ mV/H$_{2rev}$ (Dauer: 20 s). |

Die Integration des Stromes beim Meßpotential erfolgt im Bereich von 1 bis 20 s. Als Bezugselektrode dient eine Silber/Silberchlorid-Elektrode, die Gegenelektrode ist ein Platinblech. Vor der Meßelektrode ist eine Membran aus Polytetrafluoräthylen angeordnet, welches mit quaternisiertem Benzylamin gegraftet ist. Als Elektrolyt dient die in Beispiel 1 beschriebene Tyrodelösung.

Bei diesen Versuchen wurde der gleichzeitige Einfluß von Harnstoff und von Aminosäuren auf das Glucose-Meßsignal untersucht. Dabei wurde sowohl die Harnstoff- als auch die Aminosäurekonzentration (untersucht wurden jeweils Gemische der im Plasma Erwachsener vorkommenden 16 Aminosäuren) zwischen einem niedrigen physiologischen und einem hohen physiologischen Wert variiert. Es zeigte sich, daß bei der Blutglucosebestimmung im ungünstigsten Fall, d. h. entweder bei gleichzeitig hohem oder bei gleichzeitig niedrigem Aminosäure- und Harnstoffgehelt, ein Meßfehler von 20 % auftreten kann, und zwar beim Wert der physiologischen Glucosekonzentration (ca. 0,08 %). Wesentlich ist aber die Feststellung, daß beim erfindungsgemäßen Verfahren der Harnstoffeinfluß verringert wird und die Glucosekonzentration auch bei wechselndem Harnstoff- und Aminosäuregehalt bestimmt werden kann.

**Patentansprüche**

1. Verfahren zur Konzentrationsbestimmung von Zucker in Gegenwart störender Fremdsubstanzen, insbesondere zur Bestimmung von Glucose in einer Körperflüssigkeit, mittels eines eine Meßelektrode mit vorgelagerter Membran aufweisenden elektrokatalytischen Zuckersensors, wobei die Meßelektrode auf ein Reaktivierungspotential und auf ein Meßpotential potentiostatiert und oder während der Meßperiode fließende Strom mit einer zeitlichen Verzögerung in bezug auf den Beginn der Meßperiode als Meßsignal ausgewertet wird, dadurch gekennzeichnet, daß der Meßelektrode nach dem Reaktivierungspotential und vor dem Meßpotential kurzzeitig ein drittes Potential, ein sogenanntes Reduktionspotential, aufgeprägt wird, das negativer ist als das Meßpotential.

2. Verfahren nach Anspruch 1, dadurch gekennzeichnet, daß der Meßelektrode das Reduktionspotential für die Dauer von 1 bis 10 s aufgeprägt wird.

3. Verfahren nach Anspruch 1 oder 2, dadurch gekennzeichnet, daß das Reaktivierungspotential größer ist als 800 mV und vorzugsweise zwischen 1200 und 1600 mV liegt, daß das Meßpotential zwischen 200 und 800 mV liegt und vorzugsweise etwa 400 mV beträgt, und daß das Reduktionspotential kleiner ist als 200 mV und vorzugsweise etwa 100 mV beträgt, jeweils bezogen auf das Potential einer reversiblen Wasserstoffelektrode.

4. Verfahren nach einem der Ansprüche 1 bis 3, dadurch gekennzeichhet, daß der Meßelektrode das Reaktivierungspotential, das Reduktionspotential und das Meßpotential nacheinander potentiostatisch aufgeprägt wird.

5. Verfahren nach einem der Ansprüche 1 bis 3, dadurch gekennzeichnet, daß das Reduktionspotential potentiodynamisch, insbesondere linear mit der Zeit, angesteuert wird, und daß der Übergang vom Reduktionszum Meßpotential in derselben Weise erfolgt.

6. Verfahren nach einem der Ansprüche 1 bis 3, dadurch gekennzeichnet, daß der Meßelektrode nach der Reaktivierung, insbesondere galvanostatisch, eine vorgegebene Ladungsmenge zugeführt und auf diese Weise das Reduktionspotential eingestellt wird.

7. Verfahren nach einem der Ansprüche 1 bis 3, dadurch gekennzeichnet, daß der ohmsche Spannungsabfall zwischen der Meßelektrode und der Bezugselektrode kompensiert wird, wobei eine gewisse Überkompensation eingestellt wird.

**Claims**

1. Process for the determination of concentration of sugar in the presence of harmful foreign substances, in particular or the determination of glucose in a body fluid, by means of an electrocatalytic sugar sensor possessing a measuring electrode with a membrane extending in front of it, wherein the measuring electrode is potentiostatically maintained with respect to a reactivating potential and to a measuring potential and the current flowing during the measuring period is evaluated as measuring signal with a temporary delay in relation to the beginning of the measuring period, characterised in that there is imposed on the measuring electrode after the reactivating potential and before the measuring potential for a short time a third potential, a so-called reduction potential, which is more negative than the measuring potential.

2. Process according to claim 1, characterised in that the reduction potential is imposed on the measuring electrode for the period of 1 to 10 seconds.

3. Process according to claim 1 or 2, characterised in that the reactivation potential is greater than 800 mV and lies preferably between 1200 and 1600 mV, that the measuring potential lies between 200 and 800 mV and preferably amounts to about 400 mV, and that the reduction potential is smaller than 200 mV and preferably amounts to about 100 mV, respectively related to the potential of a reversible hydrogen electrode.

4. Process according to one of claims 1 to 3, characterised in that the reactivating potential, the reduction potential and the measuring potential are applied one after another potentiostatically to the measuring electrode.

5. Process according to one of claims 1 or 3, characterised in that the reduction potential is controlled potentiodynamically, in particular linearly with time, and that the transition from the reduction to the measuring potential takes place in the same manner.

6. Process according to one of claims 1 to 3, characterised in that there is supplied to the measuring electrode after the reactivation, in particular galvanostatically, a predetermined amount of charge and the reduction potential is adjusted in this way.

7. Process according to one of claims 1 to 3, characterised in that the ohmic potential decay between the measuring electrode and the reference electrode is compensated for, with a certain over - compensation being employed.

**Revendications**

1. Procédé de détermination de la concentration de sucre en présence d'autres substances gênantes, notamment de détermination du glucose dans un liquide de l'organisme, au moyen d'un détecteur de sucre par électrocatalyse comportant une électrode de mesure devant laquelle est placée une membrane, qui consiste à potentiostater l'électrode de mesure à un potentiel de réactivation et à un potentiel de mesure et à exploiter, comme signal de mesure, le courant électrique qui passe pendant la durée de la mesure, avec un retard dans le temps par rapport au début de la durée de mesure, caractérisé en ce qu'il consiste à appliquer brièvement à l'électrode de mesure, après le potentiel de réactivation et avant le potentiel de mesure, un troisième potentiel, dit potentiel de réduction, qui est plus négatif que le potentiel de mesure.

2. Procédé suivant la revendication 1, caractérisé en ce qu'il consiste à appliquer à l'électrode de mesure le potentiel de réduction pendant une durée de 1 à 10 secondes.

3. Procédé suivant la revendication 1 ou 2, caractérisé en ce que le potentiel de réactivation est supérieur à 800 mV et, de préférence, compris entre 1200 et 1600 mV, en ce que le potentiel de mesure est compris entre 200 et 800 mV et, de préférence, de 400 mV environ, et en ce que le potentiel de réduction est inférieur à 200 mV et, de préférence, de 100 mV environ, chacun de ces potentiels étant rapporté à celui d'une électrode réversible à l'hydrogène.

4. Procédé suivant l'une des revendications 1 à 3, caractérisé en ce qu'il consiste à appliquer potentiostatiquement à l'électrode de mesure le potentiel de réactivation, le potentiel de réduction et le potentiel de mesure, l'un après l'autre.

5. Procédé suivant l'une des revendications 1 à 3, caractérisé en ce qu'il consiste à appliquer le potentiel de réduction potentiodynamiquement, notamment d'une manière linéaire en fonction du temps, et à effectuer la transition du potentiel de réduction au potentiel de mesure de la même façon.

6. Procédé suivant l'une des revendications 1 à 3, caractérisé en ce qu'il consiste à envoyer, à l'électrode de mesure, après la réactivation, notamment galvanostatiquement, une quantité de charge prescrite et à la mettre ainsi au potentiel de réduction.

7. Procédé suivant l'une des revendications 1 à 3, caractérisé en ce qu'il consiste à compenser la chute ohmique de la tension de l'électrode de mesure et de l'électrode de référence, en établissant une certaine surcompensation.